Europäisches Patentamt

European Patent Office

Office européen des brevets

(11) Veröffentlichungsnummer: **0 344 502**
**A2**

## (12) EUROPÄISCHE PATENTANMELDUNG

(21) Anmeldenummer: 89108658.9

(22) Anmeldetag: **13.05.89**

(51) Int. Cl.⁴: **H02M 3/335 , H02M 1/12**

(30) Priorität: 28.05.88 DE 3818150

(43) Veröffentlichungstag der Anmeldung:
06.12.89 Patentblatt 89/49

(84) Benannte Vertragsstaaten:
**AT CH DE ES FR IT LI**

(71) Anmelder: **Blaupunkt-Werke GmbH**
**Robert-Bosch-Strasse 200**
**D-3200 Hildesheim(DE)**

(72) Erfinder: **Bormann, Godehard**
**Gartenstrasse 7**
**D-3207 Harsum(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Schaltungsanordnung zur Kompensation von Störungen.**

(57) Bei einer Schaltungsanordnung zur Kompensation von durch einen Spannungswandler verursachten Störungen, bei einer potentialfreien Spannungsquelle, die eine Sekundärwicklung des Spannungswandlers umfaßt, ist eine Kopplung, vorzugsweise mit einem Kondensator, zwischen einem Anschluß der Sekundärwicklung und einem Anschluß einer weiteren Sekundärwicklung vorgesehen, deren anderer Anschluß, mit Massepotential verbunden ist.

EP 0 344 502 A2

## Schaltungsanordnung zur Kompensation von Störungen

Die Erfindung geht aus von einer Schaltungsanordnung nach der Gattung des Hauptanspruchs.

Zur Erzeugung der Betriebsspannungen für nachrichtentechnische Geräte, insbesondere Fernsehgeräte, aus der Netzspannung sind Spannungswandler bekannt geworden, bei denen die gleichgerichtete Spannung in eine Wechselspannung höherer Frequenz umgewandelt und anschließend transformiert wird. Je nach Erfordernissen im einzelnen sind mehrere Sekundärwicklungen vorgesehen, deren Spannungen gleichgerichtet werden.

Da mit steigender Frequenz der erzeugten Wechselspannung der Transformator sowie die Siebkondensatoren auf der Sekundärseite kleiner werden können, werden die bekannten Spannungswandler mit relativ hohen Frequenzen betrieben. Da ferner die Verlustleistungen in dem Schalttransistor umso kleiner sind, je kürzer die Schaltzeiten sind, entstehen Störspannungen in einem großen Frequenzbereich.

Insbesondere für Anwendungen in Verbindung mit Telefonnetzen - beispielsweise Bildschirmtelefone -werden Spannungswandler benötigt, bei denen eine der Sekundärspannungen potentialfrei ist, während sich andere Sekundärspannungen auf ein Massepotential beziehen. Bei diesen potentialfreien Spannungsquellen ergeben sich durch kapazitive Einstreuung über den Transformator des Spannungswandlers ebenfalls Störspannungen, die durch an sich in diesen potentialfreien Spannungsquellen vorhandene Sieb- und Stabilisiermittel nicht beseitigt werden können.

Die Aufgabe der vorliegenden Erfindung ist es, derartige Störspannungen weitgehend zu vermeiden.

Die erfindungsgemäße Schaltungsanordnung mit den kennzeichnenden Merkmalen des Hauptanspruchs hat den Vorteil, daß eine Kompensation der Störspannungen mit äußerst einfachen Mitteln möglich ist.

Durch die in den Unteransprüchen aufgeführten Maßnahmen sind vorteilhafte Weiterbildungen und Verbesserungen der im Hauptanspruch angegebenen Erfindung möglich.

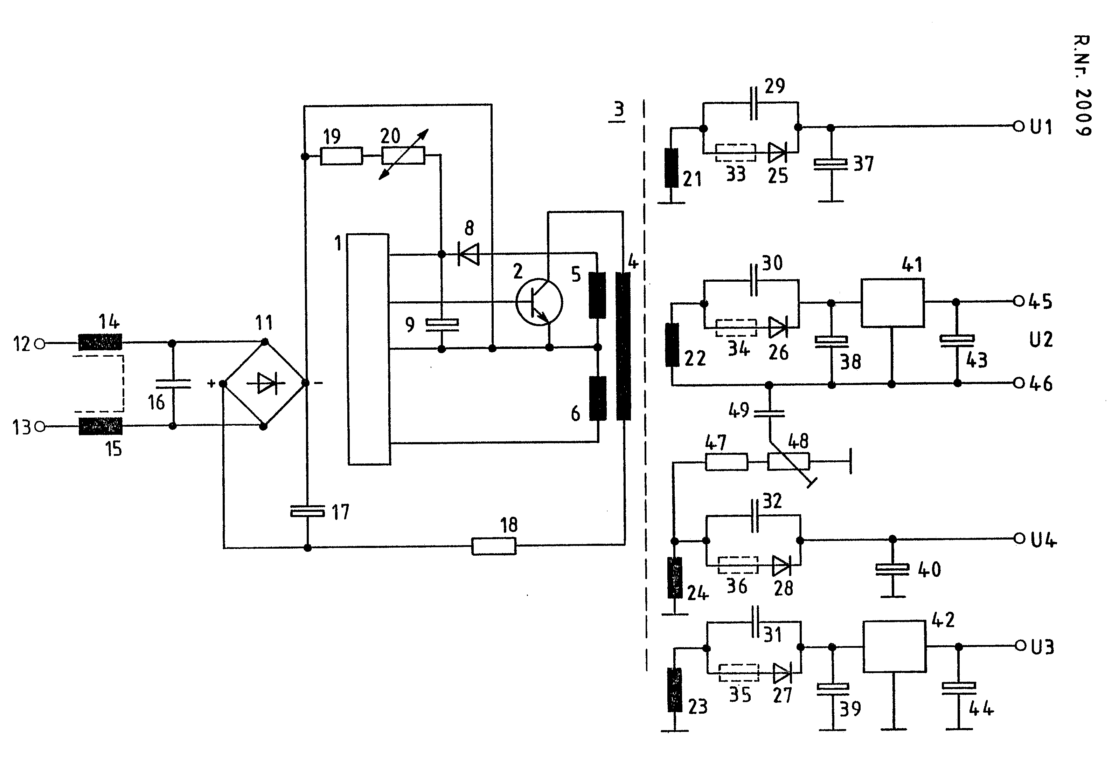

Als Ausführungsbeispiel der Erfindung ist in der Zeichnung ein Netzteil eines Bildschirmtelefons dargestellt und in der nachfolgenden Beschreibung näher erläutert.

In der Zeichnung ist der Spannungswandler, der im wesentlichen eine Steuerschaltung 1, einen Schalttransistor 2 und einen Transformator 3 umfaßt, der Übersichtlichkeit halber stark vereinfacht dargestellt. Eine Darstellung von Details erübrigt sich, da derartige Spannungswandler im einzelnen hinreichend bekannt sind. Als Steuerschaltung 1 eignet sich beispielsweise eine integrierte Schaltung vom Typ TDA 4600, welche die Erzeugung der Steuerspannung für den Schalttransistor 2 sowie Regelfunktionen übernimmt.

Der Transformator 3 weist eine Primärwicklung 4 und vier Sekundärwicklungen auf. Außerdem ist eine weitere Wicklung 5 vorgesehen, die zusammen mit einer Diode 8 und einem Ladekondensator 9 eine Betriebsspannung für die Steuerschaltung 1 erzeugt. Schließlich verfügt der Transformator 3 über eine weitere Wicklung 6, deren Spannung zu Steuerzwecken der Steuerschaltung 1 zugeführt wird.

Zur Spannungsversorgung des Spannungswandlers dienen ein Brückengleichrichter 11, dem über Netzanschlüsse 12, 13 und ein an sich bekanntes Netzfilter 14, 15, 16 Wechselspannung zugeführt wird, und ein Ladekondensator 17. Der Minusausgang des Brückengleichrichters 11 ist mit dem Emitter des Schalttransistors 2 verbunden, während der Plusausgang über einen Schutzwiderstand 18 an die Primärwicklung 4 angeschlossen ist.

Über eine Reihenschaltung aus einem Widerstand 19 und einem temperaturabhängigen Widerstand 20 ist der Brückengleichrichter 11 ferner mit einem Eingang der Steuerschaltung 1 verbunden, welcher zur Zuführung der Betriebsspannung dient. Diese Maßnahme ermöglicht nach dem Einschalten des Gerätes einen vorläufigen Betrieb der Steuerschaltung 1, bevor die Betriebsspannung für die Steuerschaltung 1 mit Hilfe der Wicklung 5 erzeugt wird.

Zur Erzeugung verschiedener Betriebsspannungen sind vier Sekundärwicklungen 21, 22, 23, 24 vorgesehen. Die Gleichrichtung erfolgt über jeweils eine Gleichrichterdiode 25, 26, 27, 28, der zum Schutz vor Spannungsspitzen jeweils ein Kondensator 29, 30, 31, 32 parallelgeschaltet ist und in deren Zuleitung jeweils eine Induktivität 33, 34, 35, 36 eingefügt ist. Jedem der Gleichrichter ist ein Ladekondensator 37, 38, 39, 40 zugeordnet. Entsprechend den Anforderungen an die Betriebsspannungen sind für zwei der Betriebsspannungen Spannungsregler 41 42 und Siebkondensatoren 43, 44 vorgesehen. Die somit erzeugten Gleichspannungen U1, U2, U3 und U4 dienen zum Betrieb verschiedener Schaltungen des Bildschirmtelefons. Dabei sind die Spannungen U1, U3 und U4 auf Massepotential bezogen. Die Spannung U2 jedoch ist potentialfrei, da sie zum Betrieb von Schaltungen dient, welche galvanisch mit den Telefonleitungen verbunden sind. Das Potential der Klemmen 45, 46 richtet sich daher nach dem Potential der Telefonleitungen.

Über die durch den Transformator bedingte kapazitive Kopplung zwischen der Sekundärwicklung 22 und den weiteren Wicklungen, insbeosndere der Primärwicklung 4, gelangen jedoch Störungen auf die Anschlüsse 45, 46. Zur Kompensation dieser Störungen wird bei dem Ausführungsbeispiel die von der Wicklung 24 erzeugte Spannung über einen Widerstand 47 einem abgleichbaren Potentiometer 48 zugeführt. Ein der Potentiometerstellung entsprechender Teil der Wechselspannung wird über einen Kondensator 49 dem Schaltungspunkt 46 zugeführt. Unter Berücksichtigung einer richtigen Polung der Wicklung 24 können durch die Einstellung des Potentiometers 47 die den Klemmen 45, 46 überlagerten Störungen weitgehend kompensiert werden. Die Kapazität des Kondensators 49 ist derart klein - beispielsweise 100 pF -, daß für Frequenzen unterhalb der Frequenz der durch den Wandler bedingten Störungen eine ausreichende Trennung zwischen Massepotential und der Spannungsquelle für U2 bestehenbleibt.

## Ansprüche

1. Schaltungsanordnung zur Kompensation von durch einen Spannungswandler verursachten Störungen, bei einer potentialfreien Spannungsquelle, die eine Sekundärwicklung des Spannungswandlers umfaßt, dadurch gekennzeichnet,
daß eine Kopplung zwischen einem Anschluß der Sekundärwicklung (22) und einem Anschluß einer weiteren Sekundärwicklung (24) vorgesehen ist, deren anderer Anschluß, mit Massepotential verbunden ist.

2. Schaltungsanordnung nach Anspruch 1, dadurch gekennzeichnet,
daß die Kopplung mit einem Kondensator (49) erfolgt.

3. Schaltungsanordnung nach Anspruch 2, dadurch gekennzeichnet,
daß zwischen dem Anschluß der weiteren Sekundärwicklung (24) und dem Kondensator (49) ein abgleichbarer Spannungsteiler (48) angeordnet ist.

4. Schaltungsanordnung nach Anspruch 3, dadurch gekennzeichnet,
daß zwischen dem Anschluß der weiteren Sekundärwicklung (24) und dem abgleichbaren Spannungsteiler (48) ein Widerstand (47) angeordnet ist.

5. Schaltungsanordnung nach einem der vorhergehenden Ansprüche, dadurch gekennzeichnet,
daß derjenige Anschluß der Sekundärwicklung (22) mit der weiteren Sekundärwicklung (24) gekoppelt ist, der von einer Gleichrichterdiode (26) abgewandt ist.

R.Nr. 2009

EP 0 344 502 A2